# EUROPÄISCHE PATENTSCHRIFT

(11) **EP 1 604 136 B1**
(45) Veröffentlichungstag und Bekanntmachung des Hinweises auf die Patenterteilung: **20.02.2008**
(21) Anmeldenummer: 03789312.0
(22) Anmeldetag: 17.12.2003
(51) Int. Cl.: F16K 15/14

(54) **EINBAUTEIL ZUM EINSETZEN IN EINE GAS- ODER FLÜSSIGKEITSLEITUNG**
INSERTION PART FOR INSERTING INTO A GAS OR LIQUID LINE
PIECE RAPPORTEE A INSERER DANS UNE CONDUITE DE GAZ OU DE LIQUIDE

(30) Priorität: 15.03.2003 DE 10311502
(43) Veröffentlichungstag der Anmeldung: 14.12.2005
(73) Patentinhaber: Neoperl GmbH, 79379 Müllheim (DE)
(72) Erfinder: HART, Keith, Welland, Worcestershire WR 13 6NE (GB); SÖCHTIG, Michael, 79395 Neuenburg (DE); WEIS, Christoph, 79379 Müllheim (DE)
(74) Vertreter: Maucher, Wolfgang
(86) Internationale Anmeldenummer: PCT/EP2003/014388
(87) Internationale Veröffentlichungsnummer: WO 2004/083698

(56) Entgegenhaltungen:
- DE-A- 1 500 206
- DE-A- 3 706 737
- DE-B- 1 009 871
- DE-B- 1 154 982
- DE-B- 1 182 487
- DE-C- 938 888
- DE-C- 946 760
- FR-A- 1 389 947
- FR-A- 2 426 199
- GB-A- 875 034
- US-A- 2 621 889
- US-A- 6 089 260

## Beschreibung

Die Erfindung betrifft ein Einbauteil mit einem, in eine Gas- oder Flüssigkeitsleitung einsetzbaren Gehäuse, in dessen Gehäuseinneren ein ringförmiges Lippenformteil angeordnet ist, das mit seinem Ringkörper im Gehäuseinneren gehalten und im Bereich eines Zuströmkanales vorgesehen ist und zumindest eine, mit einer gegenüberliegenden Gehäusewandung zusammenwirkende und vom Fluid bewegbare Lippe hat.

Aus der DE 1 154 982 ist bereits ein Rückschlagventil bekannt, das ein, in eine Gas- oder Flüssigkeitsleitung einsetzbares Gehäuse aufweist, in dessen Gehäuseinneren zumindest ein Schließkörper beweglich angeordnet ist, der in Schließstellung die Durchströmöffnung eines Zuströmkanales abdichtet. Der Schließkörper des vorbekannten Rückschlagventils ist als ringförmig umlaufendes und im wesentlichen schlauchförmiges Lippenformteil ausgebildet, das im Gehäuseinneren gehalten ist und mit seinem, im Bereich der Durchströmöffnung des Zuströmkanals angeordneten Lippen-Endbereich dichtend an einem vom Schließkörper umgriffenen zylindrischen Gehäuseteil anliegt.

Das aus DE 1 154 982 vorbekannte sanitäre Einbauteil ist als Rückschlagventil ausgebildet, dessen Schließkörper allein zwischen einer Offen- und einer Schließstellung bewegbar ist. Das aus 1 154 982 vorbekannte Einbauteil ist aber nicht als Durchflussmengenregler ausgebildet, der den durch die Wasserleitung pro Zeiteinheit durchströmenden Volumenstrom auf einen druckunabhängigen Maximalwert einzuregeln vermag.

Aus der GB-PS 875 034 ist ebenfalls nur ein Rückschlagventil bekannt, das in seinem Gehäuse einen zylindrischen Gehäuseinnenraum umgrenzt. In diesem Gehäuseinnenraum ist eine kolbenähnliche Ventileinheit verschieblich geführt, die unter dem Druck des durchströmenden Wassers vom Einlass zu dem an der gegenüberliegenden Stirnseite des Gehäuse-Innenraums vorgesehenen Auslaß bewegbar ist. Diese kolbenähnliche Ventileinheit weist ein Lippenformteil auf, das in seiner Ruhestellung die die Ventileinheit durchsetzenden Durchströmöffnungen verschließt und von dem in Durchströmrichtung fließenden Wasser in eine Offenstellung bewegbar ist. Bei einer Rückströmung einer entgegen der Durchströmrichtung fließenden Wassermenge wird der Lippen-Endbereich des Lippenformteiles gegen den die Durchströmöffnungen umgrenzenden Wandungsrandbereich gepresst und einem Rückströmen des Wassers wirkungsvoll entgegengewirkt. Auch das aus GB-PS 875 034 vorbekannte Einbauteil ist jedoch als Durchflußmengenregler weder vorgesehen noch geeignet.

Aus der DE 1 182 487 ist bereits ein für einen hohen Betriebsdruck bestimmtes Rückschlagventil bekannt, bei dem ein Ringkanal zwischen dem Ventilgehäuse und einem zentrisch in diesem eingebauten stromlinienförmigen Einsatzkörper von einem hülsenförmigen Verschlussstück aus elastischem Material verschlossen wird. Während das Verschlussstück von dem in üblicher Durchflussrichtung durchströmenden Wasser in eine Offenstellung bewegt wird, presst eine entgegen der üblichen Durchströmrichtung rückströmende Wassermenge das Verschlussstück verstärkt gegen den stromlinienförmigen Einsatzkörper, so dass der Ringkanal verschlossen bleibt.

Vergleichbare Rückschlagventile sind auch aus der FR 2 426 199, der US-PS 2 621 889, der DE 109 871, der FR 1 389 947, der DE 938 888, der DE 946 760, der DE 1 500 206 sowie der DE 37 06 737 bekannt.

Wie bereits erwähnt, vermag jedoch keines der vorbekannten Rückschlagventile den durch die Wasserleitung pro Zeiteinheit durchströmenden Volumenstrom auf einen druckunabhängigen Maximalwert einzuregeln.

Man hat auch bereits Durchflussmengenregler geschaffen, die in ihrem Gehäuseinneren einen kegel- oder konusförmigen Gehäusekern aufweisen. Der Gehäusekern wird von einem ringförmigen Drossel- oder Regelkörper aus elastischem Material umgriffen, der zwischen sich und dem Gehäusekern einen sich druckabhängig verändernden Regelspalt begrenzt. Bei der Herstellung der vorbekannten Durchflussmengenregler unterliegen die benötigten Drossel- oder Regelkörper den elastischen Eigenschaften des Gummimaterials, was von Einbauteil zu Einbauteil zu unterschiedlichen Regeleigenschaften führen kann. Darüber hinaus sind die vorbekannten Einbauteile meist vielteilig ausgestaltet und daher entsprechend aufwendig in der Herstellung.

Es besteht daher die Aufgabe, ein vielseitig verwendbares Einbauteil zu schaffen, das sich durch eine einfache Herstellung und vorzugsweise auch durch eine gleichmäßige und sichere Funktion auszeichnet.

Die erfindungsgemäße Lösung besteht bei dem Einbauteil der eingangs erwähnten Art insbesondere darin, dass das Einbauteil als Durchflussmengenregler ausgebildet ist, dessen Lippenformteil zumindest eine als Drossel- oder Regelkörper ausgebildete und mit ihrem freien Lippenende in Richtung zur benachbarten Gehäusewandung orientierte Regellippe aufweist, dass die dem freien Lippenende der Regellippe benachbarte Gehäusewandung eine Regelprofilierung aufweist, die durch in Durchströmrichtung orientierte Einformungen gebildet ist, und dass die Regellippe zwischen sich und der benachbarten Gehäusewandung einen sich druckabhängig verändernden Regelspalt begrenzt.

Das erfindungsgemäße Einbauteil weist eine Gehäusewandung auf, die eine Regelprofilierung hat, welche durch in Durchströmrichtung orientierte Einformungen gebildet ist. Mit der an der Gehäusewandung angeordneten Regelprofilierung wirkt eine am Lippenformteil vorgesehene Regellippe zusammen, die zwischen ihrem freien Lippenende einerseits und der die Regelprofilierung aufweisenden Gehäusewandung andererseits einen sich druckabhängig verändernden Regelspalt begrenzt. Dabei wird das in Richtung zur Gehäusewandung orientierte Lippenende in Abhängigkeit vom Druck des durchströmenden Fluids mehr oder weniger stark in die an der Gehäusewandung vorgesehenen und die Regelprofilierung bildenden Einformungen gepresst, so dass der dazwischen begrenzte und sich druckabhängig verändernde Regelspalt den pro Zeiteinheit durchströmenden Volumenstrom auf einen konstanten Wert einregelt. Da das mit geringem Aufwand im wesentlichen aus zwei Teilen herstellbare Einbauteil eine Regellippe hat und da das Ansprechverhalten dieses Regelkörpers weniger von den elastischen Eigenschaften der verwendeten Materialmischung und vielmehr von der Form und den Abmessungen der Regellippe abhängig ist, zeichnet sich das erfindungsgemäße Einbauteil durch eine gleichmäßige Regelfunktion aus.

Da die Regellippe erst bei einem definierten Druckwert in Richtung zur benachbarten Gehäusewandung gedrückt wird, spricht die Regellippe bei diesem Druckwert mit einem deutlich bemerkbaren Peak an, der sich als Steuerimpuls für abströmseitig nachfolgende Geräte nutzen lässt.

Dabei sieht eine besonders vorteilhafte Weiterbildung gemäß der Erfindung vor, dass das Einbauteil gleichzeitig auch als Rückflussverhinderer ausgebildet ist und dass das ringförmige Lippenformteil des Einbauteiles zumindest eine Dichtlippe hat, die als ein im Gehäuseinneren beweglich angeordneter und in Schließstellung die Durchströmöffnung des Zuströmkanales abdichtender Schließkörper vorgesehen ist, wobei die Dichtlippe in Schließstellung mit ihrem Lippenendbereich dichtend an einer gegenüberliegenden Gehäusefläche anliegt. Das gleichzeitig auch als Rückflussverhinderer ausgebildete Einbauteil weist ein rinförmiges Lippenformteil auf, das mit seinem Ringkörper im Gehäuseinneren gehalten ist. Dieses Lippenformteil hat als Schließkörper zumindest eine vom Fluid bewegbare Dichtlippe, die von einem Rückstrom des Fluids derart in Richtung zu einer gegenüberliegenden Gehäusefläche bewegt wird, dass die Dichtlippe in ihrer Schließstellung mit ihrem Lippenendbereich dichtend an dieser Gehäusefläche anliegt. Ist das Gehäuse einstückig ausgebildet, kann das erfindungsgemäße Einbauteil mit geringem Aufwand im wesentlichen aus zwei Teilen, nämlich dem Gehäuse und dem Lippenformteil, hergestellt werden. Diese geringe Teilezahl begünstigt die hohe Funktionssicherheit des erfindungsgemäßen Einbauteiles.

Dabei sieht eine bevorzugte Ausführungsform gemäß der Erfindung vor, dass im Gehäuseinneren ein Gehäusekern vorgesehen ist, der zwischen sich und dem Gehäuse-Innenumfang eine Durchströmöffnung begrenzt, und dass das Lippenformteil mit seinem Ringkörper am Gehäuse-Innenumfang gehalten ist und in Schließstellung mit dem freien Lippen-Endbereich seiner Dichtlippe dichtend am Gehäusekern anliegt.

Besonders vorteilhaft ist es, wenn das Lippenformteil mit seinem Ringkörper am Gehäuseinnenumfang gehalten ist, um mit dem freien Lippenende seiner Regellippe in Richtung zur benachbarten Gehäusewandung eines Gehäusekerns orientiert ist.

Eine Weiterbildung gemäß der Erfindung von eigener schutzwürdiger Bedeutung, welche die Funktion eines Durchflussmengenreglers sowie eines Rückflussverhinderers in einem Einbauteil zusammenfasst, sieht vor, dass das Lippenformteil zumindest eine zuströmseitige Regel- oder Steuerlippe sowie wenigstens eine abströmseitige Dichtlippe hat.

Um ein feinfühliges und weitgehend materialunabhängiges Ansprechverhalten des erfindungsgemäßen Durchflussmengenreglers zu erreichen, ist es vorteilhaft, wenn die Regellippe mit ihrem freien Lippen-Endbereich in eine der Durchströmrichtung des Fluids entgegengesetzte Richtung weist, und zwischen sich und dem Gehäuse-Innenumfang einen zuströmseitig offenen Ringraum begrenzt. In diesem zuströmseitig offenen, sacklochartigen Ringraum trifft das zuströmende Fluid derart auf die Regellippe auf, dass diese druckabhängig zum Gehäusekern gedrückt wird und den die Durchflussmenge begrenzenden und vergleichmäßigenden Regelspalt verändert.

Dabei wird ein feinfühliges Ansprechverhalten des zumindest als Durchflussmengenregler dienenden Einbauteiles begünstigt, wenn die über den Wandungsumfang der benachbarten Gehäusewandung vorzugsweise gleichmäßig verteilten Einformungen kreisbogenförmig oder dergleichen gerundet sind.

Demgegenüber kann die Dichtlippe des wenigstens als Rückflussverhinderer dienenden Einbauteiles in radialer Richtung orientiert sein und in Schließstellung mit einem Ringflansch am Gehäusekern zusammenwirken. Bevorzugt wird jedoch eine Ausführungsform, bei der die Dichtlippe mit ihrem freien Lippenendbereich in Durchströmrichtung orientiert ist. Eine solche in Durchströmrichtung orientierte Dichtlippe kann sich bei einem unerwünschten Rückstrom auch an einen zylindrischen oder kegel- beziehungsweise konusförmigen Gehäusekern dichtend anlegen.

Dabei ist es zweckmäßig, wenn die dem freien Lippenende benachbarte Gehäusewandung in ihrem von der Dichtlippe beaufschlagten Bereich einen nuten- oder einformungsfreien Wandungsabschnitt hat.

Während das Gehäuse gegebenenfalls mit seinem Gehäusekern vorzugsweise aus einem geeigneten formstabilen Metall oder insbesondere einem Kunststoffmaterial hergestellt ist, sieht eine bevorzugte Ausführungsform gemäß der Erfindung vor, dass das Lippenformteil aus einem elastischen Gummi- oder Kunststoffmaterial hergestellt ist.

Zwar kann der Ansprechdruck und das Ansprechverhalten der Regel- beziehungsweise Dichtlippen beispielsweise allein durch die Shore-Härte des gummielastischen Materials beeinflusst und festgelegt werden, bevorzugt wird jedoch eine Ausführungsform, bei welcher der Ansprechdruck und das Ansprechverhalten der Regellippe und/oder der Dichtlippe durch die Länge, die Dicke oder dergleichen Formgebung und Abmessungen der Lippe(n) und/oder durch die Materialeigenschaften des Lippenformteils vorbestimmt sind.

Das Lippenformteil kann beispielsweise in eine Nut eingelegt und gehalten werden, die am Innenumfang des gegebenenfalls auch einstückigen Gehäuses vorgesehen ist. Bevorzugt wird jedoch eine Ausführungsform, bei der das Gehäuse des Einbauteiles zumindest zweiteilig ausgebildet und das ringförmige Lippenformteil mit seinem Ringkörper zwischen zwei benachbarten Gehäuseteilen gehalten ist.

Dabei kann es zweckmäßig sein, wenn der Ringkörper des Lippenformteiles als Gehäuseteiledichtung für die benachbarten Gehäuseteile ausgebildet ist.

Um die hinsichtlich Durchflussmengenregelung und Rückflussverhinderung vorgesehenen Funktionen des erfindungsgemäßen Einbauteiles eventuell noch optimieren zu können, kann es vorteilhaft sein, wenn am Regelkörper des Lippenformteiles beidseits zumindest eine Regel- und/oder Dichtlippe vorgesehen ist, und wenn diese Regel- und/oder Dichtlippen im Bereich einer zugeordneten Durchströmöffnung beziehungsweise im Bereich eines Regelspalts angeordnet sind.

Dabei sieht eine Weiterbildung gemäß der Erfindung, für die selbständiger Schutz beansprucht wird, vor, dass am Regelkörper des vorzugsweise im wesentlichen stern- oder x-förmigen Lippenformteils beidseits jeweils eine Regellippe und eine Dichtlippe vorgesehen ist und dass die auf gegenüberliegenden Seiten des Regelkörpers vorgesehenen Lippen jeweils einem Regelspalt mit abströmseitiger Durchströmöffnung zugeordnet sind. Ein solches stern- oder x-förmiges Lippenformteil kann beispielsweise an der abströmseitigen Stirnfläche einer im Gehäuseinneren etwa mittig angeordneten Gehäuse-Ringwand verklebt, verschweißt oder dergleichen befestigt sein. Auch dieses Einbauteil kann im wesentlichen aus zwei Bauteilen, nämlich dem Gehäuse sowie dem damit verbundenen Lippenformteil, hergestellt werden.

Um dem Lippenformteil im Einbauteil einen festen und sicheren Halt zu geben, ist es vorteilhaft, wenn der Ringkörper des Lippenformteiles zwischen dem zuströmseitigen und dem abströmseitigen Gehäuseteil in einer Gehäusekammer festgelegt ist. Dabei sieht eine bevorzugte Ausführungsform gemäß der Erfindung vor, dass die Gehäusekammer bis auf einen Ringspalt verschlossen ausgebildet ist und dass den Ringspalt ein Verbindungssteg des Lippenformteiles durchsetzt, der dessen Ringkörper mit den Regel- und/oder den Dichtlippen verbindet.

Der geringe Herstellungsaufwand für das erfindungsgemäße Einbauteil wird noch zusätzlich reduziert, wenn die zum Lippenformteil benachbarten Gehäuseteile miteinander verrastbar sind. Aus dem gleichen Grunde ist es zweckmäßig, wenn der sich in Durchströmrichtung vorzugsweise kegel- oder konusförmig verjüngende Gehäusekern mit einem insbesondere zuströmseitigen Gehäuseteil über einen wenigstens radialen Verbindungssteg einstückig verbunden ist.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: ein als Durchflussmengenregler ausgebildetes und hier längs geschnittenes Einbauteil mit einem ringförmigen Lippenformteil, dessen Regellippe mit einem ebenfalls im Gehäuseinneren befindlichen kegel- oder konusförmigen zentralen Gehäusekern zusammenwirkt,
- Fig. 2: ein ebenfalls in einem Längsschnitt dargestelltes Einbauteil, ähnlich dem aus Fig.1, das sowohl als Durchflussmengenregler als auch als Rückflussverhinderer ausgebildet ist und dessen Lippenformteil dazu eine abströmseitige Dichtlippe hat,
- Fig. 3: einen mit Fig.1 vergleichbaren Durchflussmengenregler bei steigenden Druckverhältnissen in Längsschnitten (vgl. Fig.3a, 3c, 3e) und Querschnitten (vgl. Fig.3b, 3d, 3f) und
- Fig. 4: unterschiedliche und an das gewünschte Ansprechverhalten angepasste Ausführungen eines Einbauteiles nebst den diesen Ausführungen zugeordneten Leistungsdiagrammen.

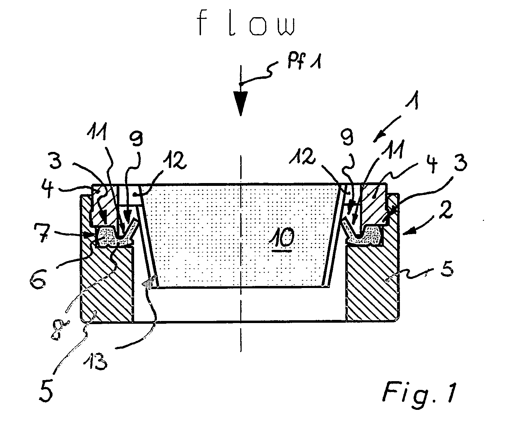

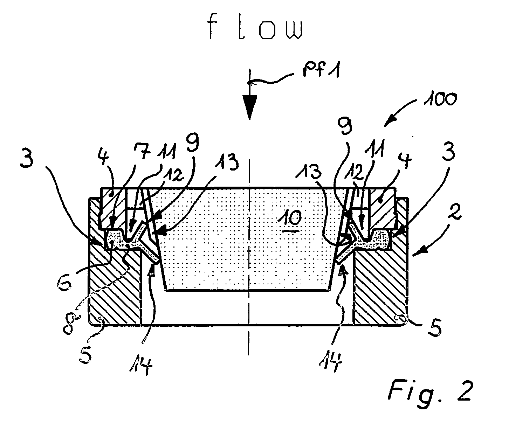

In den Figuren 1 und 2 sind Einbauteile 1, 100 dargestellt, die zumindest als Durchflussmengenregler in eine Gas- oder eine Flüssigkeitsleitung einsetzbar sind. Die Einbauteile 1, 100 weisen ein Gehäuse 2 auf, an dessen Gehäuseinnenumfang ein ringförmiges Lippenformteil 3 gehalten ist.

Wie aus den Fig.1 und 2 deutlich wird, ist das Gehäuse 2 zweiteilig ausgestaltet und weist ein zuströmseitiges und ein abströmseitiges Gehäuseteil 4, 5 auf. Das Lippenformteil 3 ist mit seinem Ringkörper 6 in einer Gehäusekammer 7 zwischen dem zuströmseitigen und dem abströmseitigen Gehäuseteil 4, 5 festgelegt. Diese Gehäusekammer 7 ist bis auf einen Ringspalt geschlossen ausgebildet. Den Ringspalt durchsetzt ein Verbindungssteg 8 des Lippenformteiles 3, der den Ringkörper 6 mit einer umlaufenden Regellippe 9 verbindet.

Die Regellippe 9 ist als Drossel- oder Regelkörper ausgestaltet, der zwischen sich und einem zentralen Gehäusekern 10 einen sich druckabhängig veränderten Regelspalt begrenzt.

Wie in den Figuren 1 und 2 dargestellt ist, weist die Regellippe 9 mit ihrem freien Lippenendbereich in eine der Durchströmrichtung Pf1 des Fluids entgegengesetzte Richtung und begrenzt zwischen sich und dem Gehäuse-Innenumfang einen zuströmseitig offenen, sacklochartigen Ringraum 11. Nach Erreichen eines festgelegten Druckes des durch die Leitung und somit auch durch das Einbauteil 1, 100 strömenden Fluids wird die Regellippe 9 druckabhängig derart in Richtung zum Gehäusekern 10 gedrückt, dass sich der Regelspalt verengt. Durch diese druckabhängige Bewegung der Regellippe 9 und die daraus resultierende Verengung des Regelspalts wird die pro Zeiteinheit durchströmende Menge des Fluids auch bei starken Druckschwankungen konstant geregelt, wobei sich die Durchflussmenge im festgelegten Toleranzfeld bewegt.

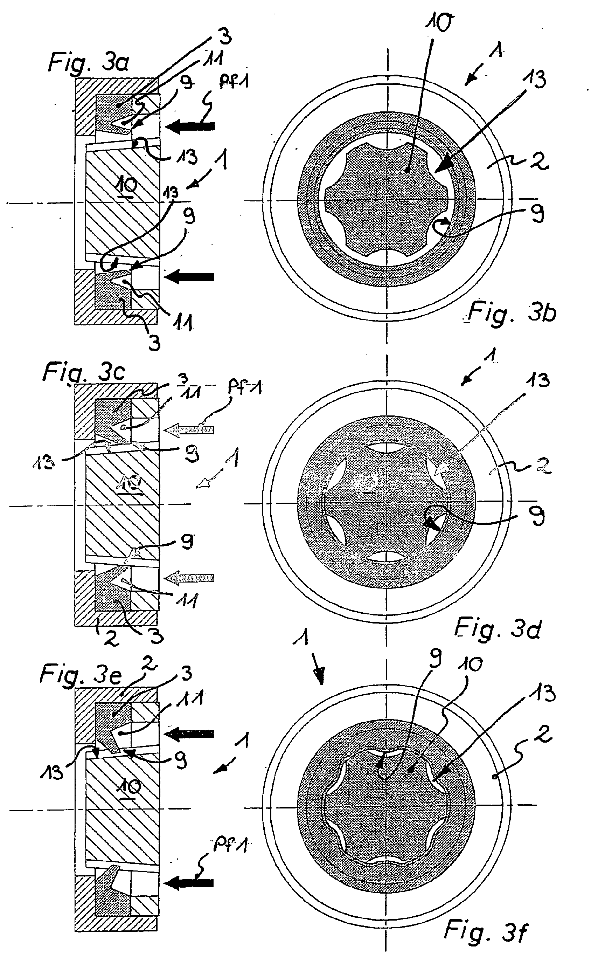

Der Gehäusekern 10 ist kegel- oder konusförmig ausgestaltet und verjüngt sich gleichmäßig in Durchströmrichtung Pf1. Der Gehäusekern 10, der über in Durchströmrichtung orientierte Radialstege 12 mit dem Gehäuseteil 4 einstückig verbunden ist, weist an seinem Außenumfang - wie auch in den in Fig.3b, 3d und 3f dargestellten Querschnitten deutlich wird - elipsoide, polygonförmige - oder wie hier - kreisbogenförmige Einformungen 13 auf, die in Durchströmrichtung orientierte und umfangseitig offene Durchströmkanäle bilden. Diese Einformungen 13 sind gleichmäßig über den Umfang des Gehäusekerns 10 verteilt.

Das in Fig.2 dargestellte Einbauteil 100 ist zusätzlich auch als Rückflussverhinderer ausgebildet. Es weist dazu am Verbindungssteg 8 seines Lippenformteiles eine abströmseitig von der Regellippe 9 angeordnete Dichtlippe 14 auf, die vom Fluid bewegbar und mit ihrem freien Lippenendbereich in Durchströmrichtung Pf1 orientiert ist. Diese Dichtlippe 14 ist als Schließkörper ausgebildet, der in Schließstellung die zwischen dem Gehäusekern 10 und dem Gehäuse-Innenumfang begrenzte Durchströmöffnung abdichtet. Bei einem unerwünschten Rückstrom des Fluids entgegen der Durchströmrichtung Pf1 wird die Dichtlippe derart in Richtung zum Gehäusekern 10 gedrückt, das sie mit ihrem freien Lippenendbereich dichtend an der gegenüberliegenden Gehäusefläche des Gehäusekerns 10 anliegt. Der Gehäusekern 10 hat dazu in seinem von der Dichtlippe 14 beaufschlagten Bereich einen nut- oder einformungsfreien Kernabschnitt.

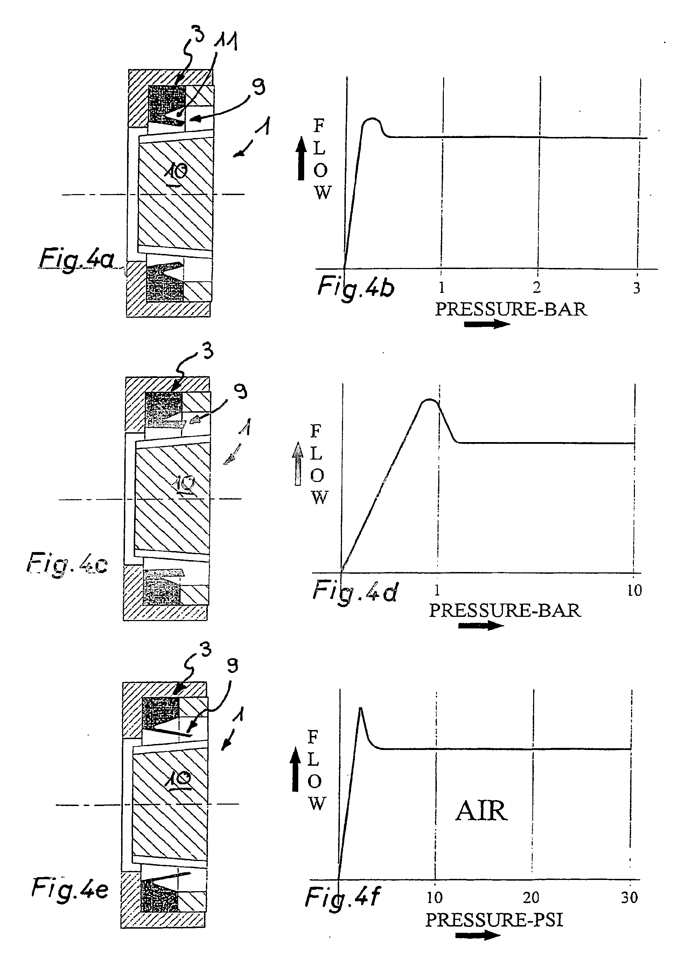

In den Fig.4b, 4d und 4f sind die Durchflussmengen pro Zeiteinheit in Abhängigkeit vom Druck des Fluids bei unterschiedlichen Ausgestaltungen des Lippenformteils dargestellt. Die dazugehörigen. als Durchflussmengenregler ausgestalteten Einbauteile 1 mit ihren verschiedenen Lippenformteilen 3 sind in den Fig.3a, 3c und 3e in einem Querschnitt gezeigt. Wie aus einem Vergleich der Figuren 4a bis 4f deutlich wird, kann der Ansprechdruck und das Ansprechverhalten der Lippen 9, 14 und insbesondere der Regellippe 9 durch die Länge, die Dicke oder dergleichen Formgebung und Abmessungen der Lippe 9, 14 sowie auch durch die Shore-Härte und dergleichen Materialeigenschaften des Lippenformteiles 3 vorbestimmt werden.

Es ist ein besonderer Vorteil der hier dargestellten Durchflussmengenregler 1, 100, dass deren Ansprechverhalten weniger von den Materialeigenschaften des gummielastischen Drossel- oder Regelkörpers 9 als vielmehr von dessen Formgebung und Abmessungen abhängt.

Wie in den Fig.3a und 3b dargestellt ist, wird die Regellippe 9 bei geringen Drücken kaum verändert. In den Fig.3c und 3d ist erkennbar, dass die Regellippe 9 bei geringfügig steigenden Wasserdrücken schnell anspricht und in Richtung zum Gehäusekern 10 gedrückt wird. Diese druckabhängige Bewegung der Regellippe 9 ist in den Figuren 4b, 4d und 4f als deutlicher Peak im Kurvenverlauf erkennbar. Dieser Peak, der je nach Ausgestaltung der Regellippe 9 mehr oder weniger deutlich ist, kann als Steuerimpuls genutzt werden, um beispielsweise einen Durchlauferhitzer zu starten.

In den Fig.3e und 3f ist angedeutet, dass die Regellippe 9 bei zunehmendem Wasserdruck auch in die Einformungen 13 des Gehäusekerns 10 gedrückt wird, wobei nun eine maximale Durchflussmenge pro Zeiteinheit nicht überschritten wird.

Die Regellippe 9 des in Fig.4a gezeigten Einbauteiles 1 ist auf einen geringen Druckbereich von 0,2 bis 3,0 bar und Flüssigkeitsmengen von 1 bis 8 l/min ausgelegt. Der freie Lippenendbereich ist dazu dünn ausgestaltet und auch im Ruhezustand in der Nähe des Gehäusekerns 10 angeordnet.

Die Regellippe 9 des in Fig.4c und 4d gezeigten Einbauteiles 1 ist auf hohe Druckwerte von 1 bis 10 bar und Durchflussmengen von 1 bis 2 l/min ausgelegt. Der freie Lippenendbereich ist dazu vergleichsweise dick ausgebildet und weiter entfernt vom Gehäusekern angeordnet. Es ist daher ein höherer Druck erforderlich, um diese Regellippe 9 in die Einformungen 13 des Gehäusekerns 10 zu drücken.

In Fig.4e ist ein Einbauteil 1 dargestellt, das eine sehr dünne und vergleichsweise lange Regellippe 9 hat, die mit ihrem freien Lippen-Endbereich bis nahe an den Gehäusekern 10 reicht. Das Einbauteil 1 gemäß Fig.4e ist für niedrigviskose Fluide beziehungsweise Fluide mit geringer Dichte, wie beispielsweise Luft oder andere Gase, vorgesehen und für niedrige Druckbereiche und hohe Durchflussmengen pro Zeiteinheit von etwa 80 l/min ausgelegt. Dieses Einbauteil ist auch in solchen Anwendungsbereichen einsetzbar, in denen herkömmliche Durchflussmengenregler mit einem O-Ring-förmigen Drossel- oder Regelkörper nicht eingesetzt werden können. Dabei ist der Ansprechdruck und das Ansprechverhalten im Gegensatz zu herkömmlichen Durchflussmengenreglern durch eine entsprechende Geometrie und Materialwahl des Lippenformteiles 3 und seiner Regellippe 9 in beiden Bereichen variierbar. Der Ansprechdruck eines solchen Einbauteiles kann bei entsprechender geometrischer Auslegung seiner Regellippe 9 auch so ausgelegt werden, dass der Ansprechdruck beispielsweise bereits bei 0,2 bar liegt.

Die hier dargestellten Einbauteile 1, 100 sind vielseitig verwendbar und zeichnen sich durch eine einfache Herstellung und eine gleichmäßige und sichere Funktion aus.

## Patentansprüche

1. Einbauteil (1, 100) mit einem, in eine Gas- oder Flüssigkeitsleitung einsetzbaren Gehäuse (2), in dessen Gehäuseinneren ein ringförmiges Lippenformteil (3) angeordnet ist, das mit seinem Ringkörper (6) im Gehäuseinneren gehalten und im Bereich eines Zuströmkanales vorgesehen ist und zumindest eine, mit einer gegenüberliegenden Gehäusewandung zusammenwirkende und vom Fluid bewegbare Lippe (9) hat, **dadurch gekennzeichnet, dass** das Einbauteil (1, 100) als Durchflußmengenregler ausgebildet ist, dessen Lippenformteil zumindest eine als Drossel- oder Regelkörper ausgebildete und mit ihrem freien Lippenende in Richtung zur benachbarten Gehäusewandung orientierte Regellippe (9) aufweist, dass die dem freien Lippenende der Regellippe (9) benachbarte Gehäusewandung eine Regelprofilierung aufweist, die durch in Durchströmrichtung (Pf 1) orientierte Einformungen (13) gebildet ist, und dass die Regellippe (9) zwischen sich und der benachbarten Gehäusewandung einen sich druckabhängig verändernden Regelspalt begrenzt.

2. Einbauteil (100) nach Anspruch 1, **dadurch gekennzeichnet, dass** das Einbauteil (100) gleichzeitig auch als Rückflussverhinderer ausgebildet ist und dass das ringförmige Lippenformteil (3) des Einbauteiles (100) zumindest eine Dichtlippe (14) hat, die als ein im Gehäuseinneren beweglich angeordneter und in Schließstellung die Durchströmöffnung des Zuströmkanales abdichtender Schließkörper vorgesehen ist, wobei die Dichtlippe (14) in Schließstellung mit ihrem Lippen-Endbereich dichtend an einer gegenüberliegenden Gehäusefläche anliegt.

3. Einbauteil nach Anspruch 1 oder 2, **dadurch gekennzeichnet, dass** im Gehäuseinneren ein Gehäusekern (10) vorgesehen ist, der zwischen sich und dem Gehäuse-Innenumfang eine Durchströmöffnung begrenzt, und dass das Lippenformteil (3) mit seinem Ringkörper (6) am Gehäuse-Innenumfang gehalten ist und in Schließstellung mit dem freien Lippen-Endbereich dichtend am Gehäusekern (10) anliegt.

4. Einbauteil (1, 100) nach Anspruch 3, **dadurch gekennzeichnet, dass** das Lippenformteil (3) mit seinem Ringkörper (6) am Gehäuseinnenumfang gehalten ist und mit dem freien Lippenende seiner Regellippe (9) in Richtung zur benachbarten Gehäusewandung eines Gehäusekerns (10) orientiert ist.

5. Einbauteil nach einem der Ansprüche 1 bis 4, **dadurch gekennzeichnet, dass** das Lippenformteil (3) zumindest eine zuströmseitige Regellippe (9) sowie wenigstens eine abströmseitige Dichtlippe (14) hat.

6. Einbauteil nach einem der Ansprüche 1 bis 5, **dadurch gekennzeichnet, dass** die zumindest eine Regellippe (9) mit ihrem freien Lippenendbereich in eine der Durchströmrichtung (Pf1) des Fluids entgegengesetzte Richtung weist und zwischen sich und dem Gehäuse-Innenumfang einen zuströmseitig offenen Ringraum (11) begrenzt.

7. Einbauteil nach einem der Ansprüche 1 bis 6, **dadurch gekennzeichnet, dass** die Einformungen (13) als zum Gehäusekern-Umfang hin offene Durchströmkanäle ausgestaltet sind.

8. Einbauteil nach einem der Ansprüche 1 bis 7, **dadurch gekennzeichnet, dass** die über den Umfang der Gehäusewandung vorzugsweise regelmäßig angeordneten Einformungen (13) elipsoid, polygonförmig, kreisbogenförmig oder dergleichen gerundet sind.

9. Einbauteil nach einem der Ansprüche 1 bis 8, **dadurch gekennzeichnet, dass** die Dichtlippe (14) mit ihrem freien Lippen-Endbereich in Durchströmrichtung (Pf1) orientiert ist.

10. Einbauteil nach einem der Ansprüche 1 bis 9, **dadurch gekennzeichnet, dass** die Gehäusewandung in ihrem von der Dichtlippe (14) beaufschlagten Bereich einen nuten- oder einformungsfreien Kernabschnitt hat.

11. Einbauteil nach einem der Ansprüche 1 bis 10, **dadurch gekennzeichnet, dass** das Lippenformteil (3) aus einem elastischen Gummi- oder Kunststoffmaterial hergestellt ist.

12. Einbauteil nach einem der Ansprüche 1 bis 11, **dadurch gekennzeichnet, dass** der Ansprechdruck und das Ansprechverhalten der Regellippe (9) und/oder der Dichtlippe (14) durch die Länge, die Dicke oder dergleichen Formgebung und Abmessungen der Lippe(n) (9, 14) und/oder durch die Materialeigenschaften des Lippenformteiles (3) vorbestimmt sind.

13. Einbauteil nach einem der Ansprüche 1 bis 12, **dadurch gekennzeichnet, dass** das Gehäuse (2) des Einbauteiles (1, 100) zumindest zweiteilig ausgebildet und das ringförmige Lippenformteil (3) mit seinem Ringkörper (6) zwischen zwei benachbarten Gehäuseteilen (4, 5) gehalten ist.

14. Einbauteil nach einem der Ansprüche 1 bis 13, **dadurch gekennzeichnet, dass** der Ringkörper (6) des Lippenformteiles (3) als Gehäuseteiledichtung für die benachbarten Gehäuseteile (4, 5) ausgebildet ist.

15. Einbauteil nach einem der Ansprüche 1 bis 14, **dadurch gekennzeichnet, dass** am Ringkörper (6) des Lippenformteiles (3) beidseits zumindest eine Regel- und/oder Dichtlippe (9, 14) vorgesehen ist, und dass diese Regel- und/oder Dichtlippen (9, 14) im Bereich einer zugeordneten Durchströmöffnung beziehungsweise im Bereich eines Regelspalts angeordnet sind.

16. Einbauteil nach Anspruch 15, **dadurch gekennzeichnet, dass** am Ringkörper (6) des vorzugsweise im wesentlichen stern- oder x-förmigen Lippenformteils (3) beidseits jeweils eine Regellippe (9) und eine Dichtlippe (14) vorgesehen ist und dass die auf gegenüberliegenden Seiten des Ringkörpers (6) vorgesehenen Lippen (9, 14) jeweils einem Regelspalt mit wenigstens einer abströmseitigen Durchströmöffnung zugeordnet sind.

17. Einbauteil nach einem der Ansprüche 1 bis 16, **dadurch gekennzeichnet, dass** der Ringkörper (6) des Lippenformteiles (3) zwischen dem zuströmseitigen und dem abströmseitigen Gehäuseteil (4, 5) in einer Gehäusekammer (7) festgelegt ist.

18. Einbauteil nach Anspruch 17, **dadurch gekennzeichnet, dass** die Gehäusekammer (7) bis auf einen Ringspalt geschlossen ausgebildet ist und dass den Ringspalt ein Verbindungssteg (8) des Lippenformteiles (3) durchsetzt, der dessen Ringkörper (6) mit den Regel- und/oder den Dichtlippen (9, 14) verbindet.

19. Einbauteil nach einem der Ansprüche 1 bis 18, **dadurch gekennzeichnet, dass** die zum Lippenformteil (3) benachbarten Gehäuseteile (4, 5) miteinander verrastbar sind.

20. Einbauteil nach einem der Ansprüche 2 bis 19, **dadurch gekennzeichnet, dass** der sich in Durchströmrichtung (Pf1) vorzugsweise kegel- oder konusförmig verjüngende Gehäusekern (10) mit einem insbesondere zuströmseitigen Gehäuseteil (4) über wenigstens einen radialen Verbindungssteg (12) einstückig verbunden ist.

## Claims

1. Insertion part (1, 100) having a housing (2) adapted to be inserted in a gas or liquid pipe, while inside the housing is arranged an annular lip moulding (3) which is held with its annular member (6) inside the housing and is provided in the region of an inflow channel and has at least one lip (9) that cooperates with an opposing housing wall and is movable by the fluid, **characterised in that** the insertion part (1, 100) is constructed as a flow regulator, the lip moulding of which comprises at least one regulating lip (9) constructed as a throttling or regulating member and oriented with its free lip end towards the adjacent housing wall, **in that** the housing wall adjacent to the free lip end of the regulating lip (9) has a regulating profile which is formed by indentations (13) oriented in the direction of throughflow (Pf 1), and **in that** the regulating lip (9) defines, between itself and the adjacent housing wall, a regulating slot that varies depending on the pressure.

2. Insertion part (100) according to claim 1, **characterised in that** the insertion part (100) is simultaneously also formed as a reflux inhibitor and **in that** the annular lip moulding (3) of the insertion part (100) has at least one sealing lip (14) which is provided as a closure member disposed to be movable inside the housing and closing off the throughflow opening of the inflow channel in the closed position, the sealing lip (14) in the closed position abutting on an opposing housing surface with its lip end region so as to form a seal.

3. Insertion part according to claim 1 or 2, **characterised in that** inside the housing is provided a housing core (10) which defines between itself and the inner periphery of the housing a throughflow opening, and **in that** the lip moulding (3) is held with its annular member (6) on the inner periphery of the housing and in the closed position abuts on the housing core (10) with the free lip end region so as to form a seal.

4. Insertion part (1, 100) according to claim 3, **characterised in that** the lip moulding (3) is held with its annular member (6) on the inner periphery of the housing and is oriented, with the free lip end of its regulating lip (9), towards the adjacent housing wall of a housing core (10).

5. Insertion part according to one of claims 1 to 4, **characterised in that** the lip moulding (3) has at least one regulating lip (9) on the inflow side and at least one sealing lip (14) on the outflow side.

6. Insertion part according to one of claims 1 to 5, **characterised in that** the at least one regulating lip (9) points with its free lip end region in a direction opposite to the direction of throughflow (Pf1) of the fluid and defines between itself and the inner periphery of the housing an annular space (11) which is open on the inflow side.

7. Insertion part according to one of claims 1 to 6, **characterised in that** the indentations (13) are in the form of throughflow channels that are open towards the circumference of the housing core.

8. Insertion part according to one of claims 1 to 7, **characterised in that** the indentations (13) arranged at preferably regular intervals around the circumference of the housing wall are ellipsoid, polygonal, arcuate or the like.

9. Insertion part according to one of claims 1 to 8, **characterised in that** the sealing lip (14) is oriented with its free lip end region in the direction of throughflow (Pf1).

10. Insertion part according to one of claims 1 to 9, **characterised in that** the housing wall has a core portion that is free from grooves or indentations in its region that is contacted by the sealing lip (14).

11. Insertion part according to one of claims 1 to 10, **characterised in that** the lip moulding (3) is made from an elastic rubber or plastics material.

12. Insertion part according to one of claims 1 to 11, **characterised in that** the response pressure and the response characteristics of the regulating lip (9) and/or of the sealing lip (14) are predetermined by the length, thickness or other shape and dimensions of the lip(s) (9, 14) and/or by the material properties of the lip moulding (3).

13. Insertion part according to one of claims 1 to 12, **characterised in that** the housing (2) of the insertion part (1, 100) is constructed in at least two parts and the annular lip moulding (3) is held with its annular member (6) between two adjacent housing parts (4, 5).

14. Insertion part according to one of claims 1 to 13, **characterised in that** the annular member (6) of the lip moulding (3) is constructed as a housing part seal for the adjacent housing parts (4, 5).

15. Insertion part according to one of claims 1 to 14, **characterised in that** at least one regulating and/or sealing lip (9, 14) is provided on each side on the annular member (6) of the lip moulding (3) and **in that** these regulating and/or sealing lips (9, 14) are arranged in the region of an associated throughflow opening or in the region of a regulating slot.

16. Insertion part according to claim 15, **characterised in that** a regulating lip (9) and a sealing lip (14) are provided on each side on the annular member (6) of the preferably substantially star-shaped or x-shaped lip moulding (3) and **in that** the lips (9, 14) provided on opposite sides of the annular member (6) are each associated with a regulating slot having at least one throughflow opening on the outflow side.

17. Insertion part according to one of claims 1 to 16, **characterised in that** the annular member (6) of the lip moulding (3) is secured between the housing part on the inflow side and the housing part on the outflow side (4, 5) in a housing chamber (7).

18. Insertion part according to claim 17, **characterised in that** the housing chamber (7) is of closed construction, apart from an annular slot, and **in that** the annular slot is penetrated by a connecting web (8) of the lip moulding (3) which connects the annular member (6) thereof with the regulating and/or sealing lips (9, 14).

19. Insertion part according to one of claims 1 to 18, **characterised in that** the housing parts (4, 5) adjacent to the lip moulding (3) can be latched to one another.

20. Insertion part according to one of claims 2 to 19, **characterised in that** the housing core (10) which preferably tapers in a conical shape in the direction of throughflow (Pf1) is integrally connected to a housing part (4) on the inflow side, in particular, by means of at least one radial connecting web (12).

## Revendications

1. Pièce rapportée (1, 100) avec un logement (2) insérable dans une conduite de gaz ou de liquide, à l'intérieur duquel est disposée une pièce moulée à lèvres (3) en forme d'anneau, laquelle est maintenue à l'intérieur avec son corps d'anneau (6) et est prévue dans la région d'un canal d'arrivée et possède au moins une lèvre (9) mobile grâce au liquide et agissant conjointement avec une paroi de logement opposée, **caractérisée en ce que** la pièce rapportée (1, 100) est conçue comme régulateur de débit, dont la pièce moulée à lèvres comporte au moins une lèvre de régulation (9) orientée vers la paroi du logement adjacente avec son extrémité de lèvre libre et conçue comme corps d'étranglement ou de régulation, **en ce que** la paroi du logement adjacente à l'extrémité libre de la lèvre de régulation (9) comporte un profilage de régulation, lequel est formé par des moulages (13) orientés dans le sens du flux de passage (Pf 1), et **en ce que** la lèvre de régulation (9) entre elle et la paroi du logement adjacente délimite un intervalle de régulation variable en fonction de la pression.

2. Pièce rapportée (100) selon la revendication 1, **caractérisée en ce que** la pièce rapportée (100) est également conçue en même temps comme système anti-retour et **en ce que** la pièce moulée à lèvres (3) en forme d'anneau de la pièce rapportée (100) possède au moins une lèvre d'étanchéité (14), qui est prévue comme corps de fermeture disposé de façon mobile à l'intérieur du logement et qui dans la position fermée obture l'ouverture du canal d'arrivée, la lèvre d'étanchéité (14) se trouvant en position fermée avec sa région d'extrémité de lèvre en appui étanche contre une surface du logement opposée.

3. Pièce rapportée selon la revendication 1 ou 2, **caractérisée en ce qu'**un noyau de logement (10) est prévu à l'intérieur du logement, lequel délimite une ouverture de flux de passage entre lui et la circonférence interne du logement, et **en ce que** la pièce moulée à lèvre (3) est maintenue avec son corps d'anneau (6) au niveau de la circonférence interne du logement et se trouve en position fermée avec la région d'extrémité libre de la lèvre en appui étanche contre le noyau de logement (10).

4. Pièce rapportée (1, 100) selon la revendication 3, **caractérisée en ce que** la pièce moulée à lèvres (3) est maintenue avec son corps d'anneau (6) au niveau de la circonférence interne du logement et est orientée avec l'extrémité libre de sa lèvre de régulation (9) vers la paroi du logement adjacente d'un noyau de logement (10).

5. Pièce rapportée selon l'une quelconque des revendications 1 à 4, **caractérisée en ce que** la pièce moulée à lèvres (3) possède au moins une lèvre de régulation (9) du côté de l'arrivée et au moins une lèvre d'étanchéité (14) du côté de la sortie.

6. Pièce rapportée selon l'une quelconque des revendications 1 à 5, **caractérisée en ce que** la au moins une lèvre de régulation (9) est orienté avec sa région d'extrémité libre de lèvre dans un sens opposé au sens du flux de sassage (Pf1) du fluide et délimite entre elle et la circonférence interne du logement un espace annulaire (11) ouvert du côté de l'arrivée.

7. Pièce rapportée selon l'une quelconque des revendications 1 à 6, **caractérisée en ce que** les moulages (13) sont réalisés comme canaux de flux de passage ouverts vers la circonférence du noyau de logement.

8. Pièce rapportée selon l'une quelconque des revendications 1 à 7, **caractérisée en ce que** les moulages (13) disposés de préférence de façon régulière sur la circonférence de la paroi du logement sont de forme arrondie ellipsoïdale, polygonale, en arc de cercle ou analogues.

9. Pièce rapportée selon l'une quelconque des revendications 1 à 8, **caractérisée en ce que** la lèvre d'étanchéité (14) avec sa région d'extrémité libre de lèvre est orientée dans le sens du flux de passage (Pf1).

10. Pièce rapportée selon l'une quelconque des revendications 1 à 9, **caractérisée en ce que** la paroi de logement possède une section de noyau sans rainure ni moulage dans sa région chargée par la lèvre d'étanchéité (14).

11. Pièce rapportée selon l'une quelconque des revendications 1 à 10, **caractérisée en ce que** la pièce moulée à lèvres (3) est fabriquée dans un matériau élastique en plastique ou en caoutchouc.

12. Pièce rapportée selon l'une quelconque des revendications 1 à 11, **caractérisée en ce que** la pression de réponse et le comportement de réponse de la lèvre de régulation (9) et/ou de la lèvre d'étanchéité (14) sont prédéterminées par la longueur, l'épaisseur ou la forme et les dimensions de la lèvre (9, 14) et/ou par les propriétés matérielles de la pièce moulée à lèvres (3).

13. Pièce rapportée selon l'une quelconque des revendications 1 à 12, **caractérisée en ce que** le logement (2) de la pièce rapportée (1, 100) est conçu au moins en deux parties et **en ce que** la pièce moulée à lèvres (3) en forme d'anneau est maintenue avec son corps d'anneau (6) entre deux parties de logement adjacentes (4, 5).

14. Pièce rapportée selon l'une quelconque des revendications 1 à 13, **caractérisée en ce que** le corps d'anneau (6) de la pièce moulée à lèvres (3) est réalisée comme joint de parties de logement pour les parties de logement adjacentes (4, 5).

15. Pièce rapportée selon l'une quelconque des revendications 1 à 14, **caractérisée en ce que** au moins une lèvre de régulation et/ou une lèvre d'étanchéité (9, 14) est prévue des deux côtés au niveau du corps d'anneau (6) de la pièce moulée à lèvres (3), et **en ce que** ces lèvres de régulation et/ou d'étanchéité (9, 14) sont disposées dans une région d'une ouverture de flux de passage affectée ou dans la région d'un intervalle de régulation.

16. Pièce rapportée selon la revendication 15, **caractérisée en ce qu'**une lèvre de régulation (9) et une lèvre d'étanchéité (14) sont prévues respectivement des deux côtés au niveau du corps d'anneau (6) de la pièce moulée à lèvres (3), de préférence principalement en forme d'étoile ou de x, et **en ce que** les lèvres prévues (9, 14) aux côtés opposés du corps d'anneau (6) sont affectées respectivement à un intervalle de régulation avec au moins une ouverture de flux de passage du côté de la sortie.

17. Pièce rapportée selon l'une quelconque des revendications 1 à 16, **caractérisée en ce que** le corps d'anneau (6) de la pièce moulée à lèvres (3) est fixé entre la partie du logement (4, 5) du côté de l'arrivée et du côté de la sortie dans une chambre de logement (7).

18. Pièce rapportée selon la revendication 17, **caractérisée en ce que** la chambre de logement (7) est entièrement fermée à l'exception d'un intervalle annulaire et **en ce qu'**une traverse de liaison (8) de la pièce moulée à lèvres (3) traverse l'intervalle annulaire, laquelle traverse de liaison relie le corps d'anneau (6) aux lèvres de régulation et/ou d'étanchéité (9, 14).

19. Pièce rapportée selon l'une quelconque des revendications 1 à 18, **caractérisée en ce que** les parties de logement (4, 5) adjacentes à la pièce moulée à lèvres (3) sont mutuellement enclenchables.

20. Pièce rapportée selon l'une quelconque des revendications 2 à 19, **caractérisée en ce que** le noyau de logement (10) se rétrécissant de préférence de façon conique dans le sens du flux de passage (Pf1) est relié d'une seule pièce à une partie de logement (4), plus particulièrement du côté de l'arrivée, via au moins une traverse de liaison (12) radiale.
